# EUROPEAN PATENT APPLICATION

(11) **EP 4 668 769 A1**
(43) Date of publication of application: **24.12.2025**
(21) Application number: 24756229.1
(22) Date of filing: 07.02.2024
(51) Int. Cl.: H04N 23/63, H04N 23/62

(54) **MEDIA CONTENT SENDING METHOD AND APPARATUS, DEVICE, AND STORAGE MEDIUM**

(30) Priority: 17.02.2023 CN 202310180641
(71) Applicant: Beijing Zitiao Network Technology Co., Ltd., Beijing 100190 (CN)
(72) Inventor: LI, Yaping, Beijing 100028 (CN); SONG, Xin, Beijing 100028 (CN); FANG, Mengying, Beijing 100028 (CN); SHU, Siqi, Beijing 100028 (CN)
(74) Representative: Isarpatent
(86) International application number: PCT/CN2024/076625
(87) International publication number: WO 2024/169856

(57) **Abstract**

Embodiments of the present disclosure disclose a media content sending method and apparatus, a device, and a storage medium, and relate to the field of computer technology. The method comprises: presenting an image to be acquired in a preview area of a preset interface, and presenting at least one user identifier in an identifier presentation area of the preset interface; performing acquisition of the image in response to a trigger operation on a first user identifier presented in the identifier presentation area; and determining first media content according to the acquired image, and sending the first media content to a first user corresponding to the first user identifier.

## Description

### CROSS-REFERENCE TO RELATED APPLICATIONS

The present application is based on and claims priority of the Chinese Patent Application No. 202310180641.9 filed on February 17, 2023, the disclosure of which is incorporated by reference herein in its entirety.

### TECHNICAL FIELD

Embodiments of the present disclosure relate to the field of computer technology, and in particular to a media content sending method and apparatus, a device, and a storage medium.

### BACKGROUND

With the rapid development of computer technology and Internet technology, the functions of applications in electronic devices are becoming more and more abundant. Currently, many applications have the function of capturing images such as photos or videos, and after the completion of capture, users can send the corresponding media content to their friends, achieving interaction based on the media content.

### SUMMARY

The embodiments of the present disclosure provide a media content sending method and apparatus, a storage medium, and a device, which can optimize the existing media content sending solutions.

In a first aspect, an embodiment of the present disclosure provides a media content sending method, comprising:
presenting an image to be acquired in a preview area of a preset interface, and presenting at least one user identifier in an identifier presentation area of the preset interface;
performing acquisition of the image in response to a trigger operation on a first user identifier presented in the identifier presentation area;
determining first media content according to the acquired image, and sending the first media content to a first user corresponding to the first user identifier.

In a second aspect, an embodiment of the present disclosure further provides a media content sending apparatus, comprising:
a presentation module, configured to present an image to be acquired in a preview area of a preset interface, and present at least one user identifier in an identifier presentation area of the preset interface;
an image acquisition module, configured to perform acquisition of the image in response to a trigger operation on a first user identifier presented in the identifier presentation area;
a content sending module, configured to determine first media content according to the acquired image, and send the first media content to a first user corresponding to the first user identifier.

In a third aspect, an embodiment of the present disclosure further provides an electronic device, comprising:
one or more processors;
a memory, configured to store one or more programs,
wherein the one or more programs, when executed by the one or more processors, cause the one or more processors to implement the media content sending method provided by an embodiment of the present disclosure.

In a fourth aspect, an embodiment of the present disclosure further provides a storage medium containing computer executable instructions, which, when executed by a computer processor, are used for executing the media content sending method provided by an embodiment of the present disclosure.

In the media content sending solution provided by an embodiment of the present disclosure, an image to be acquired is presented in a preview area of a preset interface, and at least one user identifier is presented in an identifier presentation area of the preset interface; acquisition of the image is performed in response to a trigger operation on a first user identifier presented in the identifier presentation area; first media content is determined according to the acquired image, and the first media content is sent to a first user corresponding to the first user identifier.

### BRIEF DESCRIPTION OF THE DRAWINGS

The above and other features, advantages and aspects of the embodiments of the present disclosure will become more apparent with reference to the following detailed description in conjunction with the accompanying drawings. Throughout the drawings, the same or similar reference numerals refer to the same or similar elements. It is to be understood that the drawings are schematic and that components and elements are not necessarily drawn to scale.
FIG. 1 is a schematic flow chart of a media content sending method provided by an embodiment of the present disclosure;
FIG. 2 is a schematic diagram of an interface provided by an embodiment of the present disclosure;
FIG. 3 is a schematic diagram of an interface interaction provided by an embodiment of the present disclosure;
FIG. 4 is a schematic diagram of another interface interaction provided by an embodiment of the present disclosure;
FIG. 5 is a schematic flow chart of another media content sending method provided by an embodiment of the present disclosure;
FIG. 6 is a schematic diagram of another interface interaction provided by an embodiment of the present disclosure;
FIG. 7 is a schematic diagram of another interface interaction provided by an embodiment of the present disclosure;
FIG. 8 is a schematic structural diagram of a media content sending apparatus provided by an embodiment of the present disclosure;
FIG. 9 is a schematic structural diagram of an electronic device provided by an embodiment of the present disclosure.

### DETAILED DESCRIPTION

The embodiments of the present disclosure will be described in more detail below with reference to the accompanying drawings. Although certain embodiments of the present disclosure are shown in the drawings, it should be understood that the present disclosure can be implemented in various forms and should not be construed as limited to the embodiments set forth herein. Instead, these embodiments are provided to provide a more thorough and complete understanding of the present disclosure. It should be understood that the drawings and embodiments of the present disclosure are only for illustrative purposes and are not intended to limit the protection scope of the present disclosure.

It should be understood that the steps described in the method embodiments of the present disclosure may be performed in a different order and/or, performed in parallel. Furthermore, method embodiments may include additional steps and/or omit performing the illustrated steps. The scope of the present disclosure is not limited in this respect.

The term "comprise" and variations thereof as used herein are open-ended inclusions, i.e., "comprising but not limited to". The term "based on" means "based at least in part on". The term "one embodiment" means "at least one embodiment"; the term "another embodiment" means "at least one additional embodiment"; the term "some embodiments" means "at least some embodiments". Relevant definitions of other terms will be given in the following description.

It needs to be noted that the concepts such as "first" and "second" mentioned in the present disclosure are only used to distinguish different devices, modules or units, and are not used to limit the order or interdependence of the functions performed by these devices, modules or units.

It should be noted that the modifications of "one" and "plurality" mentioned in the present disclosure are illustrative rather than restrictive, and those skilled in the art should understand that unless otherwise clearly indicated in the context, it should be understood as "one or more".

The names of the messages or information exchanged between multiple devices in the embodiments of the present disclosure are only used for illustrative purposes and are not used to limit the scope of these messages or information.

It can be understood that before using the technical solutions disclosed in the embodiments of the present disclosure, the types, scope of use, usage scenarios, etc. of the personal information involved in the present disclosure should be informed to the user and the user's authorization should be obtained in an appropriate manner in accordance with relevant laws and regulations.

For example, in response to receiving an active request from a user, a prompt message is sent to the user to explicitly prompt the user that the operation requested to be performed will require obtaining and using the user's personal information. Thus, the user can independently choose whether to provide the personal information to software or hardware such as an electronic device, application, server or storage medium that executes the operation of the technical solution of the present disclosure according to the prompt information.

As an optional but non-limiting implementation, in response to receiving an active request from the user, the prompt information may be sent to the user in the form of a pop-up window, for example, in which the prompt information may be presented in text form. In addition, the pop-up window may also carry a selection control for the user to choose "agree" or "disagree" to provide personal information to the electronic device.

It can be understood that the process of informing the user and obtaining the user's authorization described above is merely illustrative and does not constitute a limitation on the implementation of the present disclosure. Other methods that meet the relevant laws and regulations may also be applied to the implementation of the present disclosure.

It can be understood that the data involved in this technical solution (including but not limited to the data itself, the acquisition or use of the data) shall comply with the requirements of relevant laws, regulations and relevant provisions.

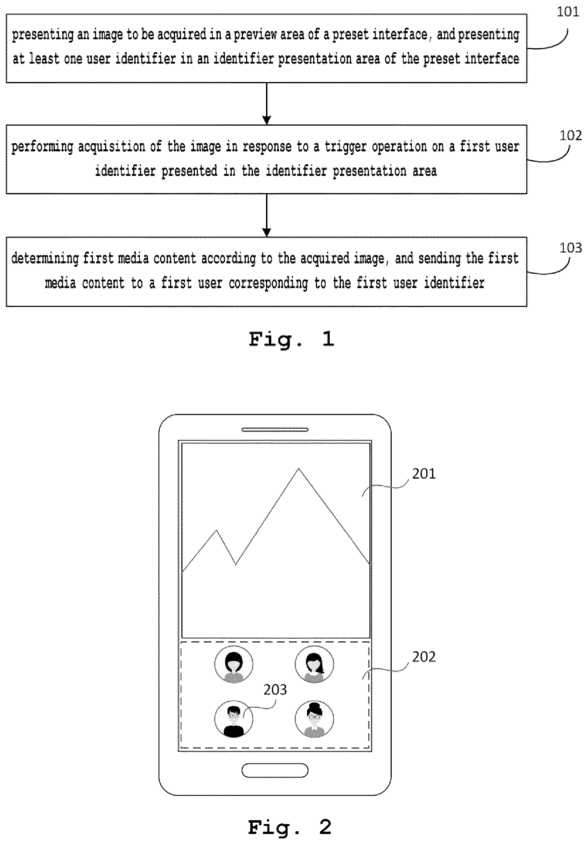

FIG. 1 is a schematic flow chart of a media content sending method provided by an embodiment of the present disclosure. The embodiment of the present disclosure is applicable to the circumstances under which media content is sent. This method may be executed by a media content sending apparatus, which may be implemented in the form of software and/or hardware. Optionally, it may be implemented by an electronic device, which may be a mobile terminal such as a mobile phone, a smart watch, a tablet computer, or a personal digital assistant, or a device such as a personal computer (PC) or a server.

As shown in FIG. 1, the method comprises:
Step 101: presenting an image to be acquired in a preview area of a preset interface, and presenting at least one user identifier in an identifier presentation area of the preset interface.

In the embodiment of the present disclosure, the preset interface may be an interface in a preset application. The preset application may provide an image acquisition function and a media content sending function, the specific type thereof is not limited, and the preset application may be installed in an electronic device. The preset interface includes a preview area and an identifier presentation area, the sizes of the preview area and the identifier presentation area and their positions on the preset interface being not limited. The preview area and the identifier presentation area can be separated from each other or overlap in whole or in part.

Exemplarily, images may include pictures and videos, etc., and may be acquired using an acquisition device such as a camera configured in an electronic device. The preview area can be understood as a viewfinder of the acquisition device, and presenting an image to be acquired in the preview area can be understood as presenting a preview screen in the viewfinder.

Exemplarily, the user identifier may include a user virtual character, a user name, or a user nickname, etc. At least one user identifier is presented in the identifier presentation area, so that the current user can quickly identify the object to which media content is to be sent according to a user identifier, so as to select a suitable user identifier for triggering later. The user identifier presented in the identifier presentation area may be automatically set by a preset application or may be preset by the current user. Optionally, the current user may change the user identifier presented in the identifier presentation area. For example, in response to a change operation input by the current user, a next user identifier or next batch of user identifiers may be presented in the identifier presentation area.

FIG. 2 is a schematic diagram of an interface provided by an embodiment of the present disclosure. As shown in FIG. 2, the preset interface includes a preview area 201 in which a preview screen is presented and an identifier presentation area 202 in which user identifiers 203 are presented, 4 user virtual characters being taken as an example in the figure. Optionally, if the user inputs an operation such as leftward slide, a next batch of user identifiers, i.e., 4 new user identifiers, may be displayed.

Step 102: performing acquisition of the image in response to a trigger operation on a first user identifier presented in the identifier presentation area.

Exemplarily, there is no limitation on the type of the trigger operation on the user identifier presented in the identifier presentation area, and it may be, for example, a click, a double-click, a long press, or the like. Optionally, different types of trigger operations may correspond to the acquisition of different types of images. Taking an image being a photo as an example, assuming that the current user wants to take a photo of the scenery currently framed in the preview area and send it to a certain user (recorded as a first user), a choice may be made to input a trigger operation on the first user identifier corresponding to the first user, that is, the user corresponding to the triggered user identifier is determined as the object to which the media content is to be sent; after receiving the trigger operation, acquisition of the image is performed, for example, photos are taken through a camera.

Step 103: determining first media content according to the acquired image, and sending the first media content to a first user corresponding to the first user identifier.

Exemplarily, after image acquisition is completed, the media content to be sent to the first user (recorded as first media content) is determined according to the acquired image, and the first media content is sent to the first user, thereby realizing one trigger operation of the current user. Triggering acquisition of the image, determining the send object, and triggering the sending of the media content can reduce user operations, shorten the operation path, and improve the convenience in sharing the media content. It can be understood that whether acquisition of the image is completed may be determined based on the user's trigger operation on the first user identifier. For example, after clicking on the first user identifier and letting go, it is determined that image acquisition is completed, and the currently acquired image may be sent as a picture to the first user; after long pressing the first user identifier to take a video and letting go, it is determined that image acquisition is completed, and the currently acquired video image may be sent as video content to the first user.

In the media content sending method provided by the embodiment of the present disclosure, an image to be acquired is presented in a preview area of a preset interface, and at least one user identifier is presented in an identifier presentation area of the preset interface; acquisition of the image is performed in response to a trigger operation on a first user identifier presented in the identifier presentation area; first media content is determined according to the acquired image, and the first media content is sent to a first user corresponding to the first user identifier. By adopting the above technical solution, while previewing the image to be acquired on the preset interface, the user may conveniently trigger acquisition of the image and the sending of the corresponding media content by triggering the user identifiers on the preset interface, which can shorten the user operation path and improve the convenience in image acquisition and the sending of the corresponding media content.

In some embodiments, the presenting at least one user identifier in an identifier presentation area of the preset interface comprises: presenting at least one user identifier corresponding to a user having a preset association relationship with the current user in the identifier presentation area of the preset interface. In this way, the current user is helped to quickly locate the object to which the media content is to be sent, wherein the preset association relationship may be set independently by the current user. For example, the preset association relationship may be being present in a target conversation group, a target contact group or the like with the current user.

In some embodiments, before responding to a trigger operation on a target user identifier presented in the identifier presentation area, the method further comprises: obtaining input information of the current user on the preset interface; wherein the determining first media content according to the acquired image comprises: determining the first media content according to the acquired image and the input information. In this way, the amount of information in the first media content can be enriched, the forms of interaction can be enriched, and the interaction effect can be improved.

Exemplarily, the input information may include characters or pictures, etc., wherein the characters may include text and symbols, and the pictures may include emoticons, etc., and the input information may further include speech, etc. At the time of determining the first media content, the input information may be synthesized into the acquired image to obtain the first media content to be sent.

In some embodiments, after obtaining input information of the current user on the preset interface, the method further comprises: displaying the input information at a first preset position in the image presented in the preview area; wherein the determining the first media content according to the acquired image and the input information comprises: adding the input information at the first preset position in the acquired image to obtain the first media content. In this way, the user can preview the effect of the first media content more intuitively.

Exemplarily, the first preset position may be automatically set by a preset application, or may be preset by the current user. Optionally, after displaying the input information at a first preset position in the image presented in the preview area, the method may further comprise: adjusting the first preset position in response to an information display position adjustment operation input by the current user. For example, the information display position adjustment operation may be a drag operation on the input information, making it convenient for the current user to freely adjust the display position of the input information in the image. Optionally, if the input information is speech, a speech control may be added at the first preset position, which is associated with the speech as the input information, and after receiving the first media content, the first user may trigger the playing of the speech as the input information by triggering the speech control.

In some embodiments, before the obtaining input information of the current user on the preset interface, the method further comprises: displaying a preset input control at a second preset position in the image presented in the preview area, wherein the preset input control is configured to trigger entry of the input information. In this way, it is convenient to trigger the information input operation on the basis of prompting the user that the input information may be added to the image.

Optionally, the first preset position is the same as or different from the second preset position. In some embodiments, the first preset position is associated with the second preset position. In this way, it is convenient for the current user to predict the display position of the input information. The way of association may be, for example, that the first preset position includes the second preset position.

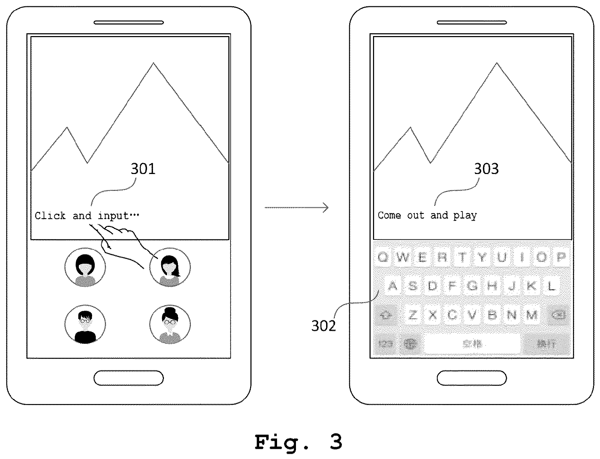

FIG. 3 is a schematic diagram of an interface interaction provided by an embodiment of the present disclosure. As shown in FIG. 3, a preset input control 301 is displayed at a second preset position in an image presented in a preview area, the preset input control 301 may include prompt information, such as "Click and input ..." in the figure. After the current user clicks the preset input control 301, a preset input panel 302 may be displayed, and the current user may input the information he wants to add through the preset input panel 302, which is displayed at the first preset position, such as input information 303, "Come out and play", shown in FIG. 3. If the input information needs to occupy more display space, the first preset position includes the second preset position, that is, the area occupied by the first preset position is larger than that occupied by the second preset position. For example, the first preset position is a position including two rows of characters, and the second preset position is a position including one row of characters.

In some embodiments, the image includes a picture and/or a video; wherein performing acquisition of the media content in response to a trigger operation on a first user identifier presented in the identifier presentation area comprises: performing acquisition of the picture in response to a first trigger operation on the first user identifier presented in the identifier presentation area; and/or performing acquisition of the video in response to a second trigger operation on the first user identifier presented in the identifier presentation area, wherein the second trigger operation is different from the first trigger operation. In this way, the types of media content that can be sent can be enriched, and for different types of media content, different types of trigger operations can be used to trigger the user identifiers.

The first trigger operation may be a click, and the second trigger operation may be a long press. Exemplarily, after the second trigger operation is recognized, video capture may be started. In the capture process, capture prompt information, such as changing a display size of the first user identifier, adding a border to the first user identifier, or changing a background color of the first user identifier, etc., may be displayed through the first user identifier, to prompt the current user that video capture is in progress. The border may also be reused as a capture progress bar. If it is detected that the current user ends the second trigger operation, it may be determined that capture is completed, and the first media content is determined according to the captured video and sent to the first user. Optionally, a preset abandonment identifier is displayed on the preset interface, and if the user decides to abandon sending in the capture process, he may slide to the preset abandonment identifier while keeping pressing and holding the screen, and the media content sending operation is abandoned.

In some embodiments, concurrently with or after the sending the first media content to a first user corresponding to the first user identifier, the method further comprises: displaying a preset sending identifier at a position associated with the first user identifier. In this way, the triggering operation of the current user on the first user identifier is responded to intuitively.

The associated position may be, for example, a position within the first user identifier, such as the center position, or the upper left corner or lower right corner, of the first user identifier; the preset sending identifier may be an icon or text indicating the sending of information. For example, as for sending an image, the preset sending identifier may be an arrow icon or the text of "Sent"; as for sending a video, in the video sending process, the preset sending identifier may be a dynamic arrow icon or the text of "Sending", and after the video sending is completed, the preset sending identifier may be a static arrow icon or the text of "Sent".

In some embodiments, the preset sending identifier is associated with the first media content. In this way, the association between the sending object and the sent content can be reflected more intuitively.

The way of association of the preset sending identifier and the first media content may be that the preset sending identifier includes all or part of the first media content. For example, as for sending an image, the preset sending identifier may be a thumbnail of the image; for another example, as for sending a video, the preset sending identifier may be a thumbnail of a video cover, which may be, for example, a first frame image or an automatically determined frame image.

In some embodiments, the method further comprises: entering a preset view interface in response to the receipt of second media content sent by a second user; and presenting the second media content on the preset view interface. In this way, the user can view newly received media content in a timely and convenient manner.

Optionally, while presenting the second media content on the preset view interface, the method further comprises: presenting a second user identifier corresponding to the second user on the preset view interface. In this way, it is convenient for the current user to quickly view the sender of the media content.

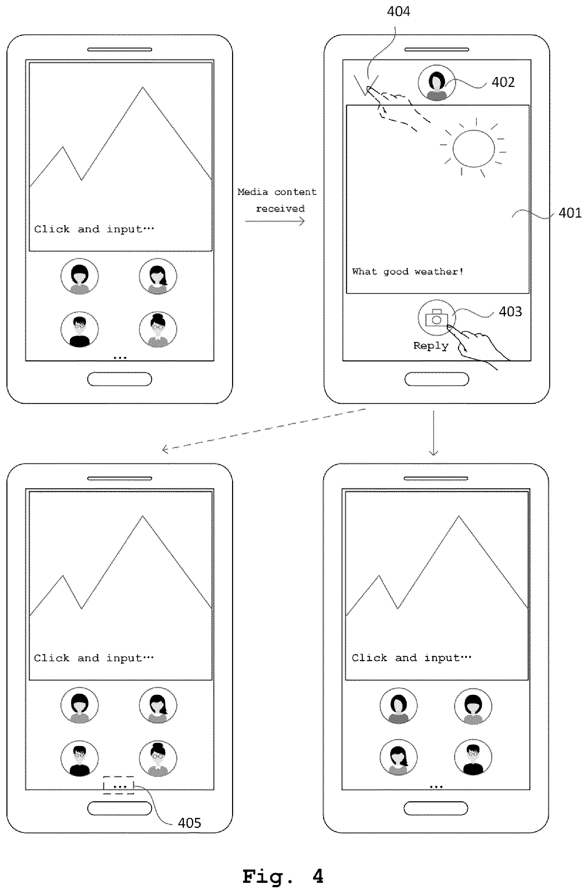

FIG. 4 is a schematic diagram of another interface interaction provided by an embodiment of the present disclosure. As shown in FIG. 4, in the case where the preview area and the identifier presentation area are displayed on the preset interface, upon receiving the second media content sent by the second user, it is possible to automatically enter the preset view interface, on which second media content 401 is displayed, a second user identifier 402 being displayed above the second media content 401.

In some embodiments, the entering a preset view interface in response to the receipt of second media content sent by a second user comprises: in response to the receipt of the second media content sent by the second user, determining whether acquisition of the image is currently being performed, and if not, entering the preset view interface. In this way, it can be ensured that the media content acquisition operation proceeds smoothly.

Optionally, after determining whether acquisition of the media content is currently being performed, the method further comprises: if so, waiting for the current acquisition of the image to be completed, before entering the preset view interface. Thereby, after the current acquisition of the image is completed, the preset view interface is automatically entered, so that the user views newly received media content in a timely and convenient manner. Entering the preset view interface, and determining the media content according to the acquired image and sending the media content may be performed in parallel.

In some embodiments, presenting the second media content on the preset view interface comprises: presenting the second media content and a preset reply control on the preset view interface; entering the preset interface in response to a trigger operation on the preset reply control, and presenting a second user identifier corresponding to the second user in the identifier presentation area. In this way, it is convenient for the current user to reply to the received media content by sending the media content, thereby improving the interaction efficiency.

Exemplarily, if the second user identifier is not presented in the identifier presentation area of the preset interface before entering the preset view interface, the presentation of the second user identifier may be added in the identifier presentation area of the preset interface after receiving a trigger operation on the preset reply control; if the second user identifier is already presented in the identifier presentation area of the preset interface before entering the preset view interface, the presentation of the second user identifier may be maintained in the identifier presentation area of the preset interface after receiving the trigger operation on the preset reply control, and the presentation position of the second user identifier may also be adjusted. For example, if the second user identifier is not presented at a target position (such as the first position), the presentation position of the second user identifier may be adjusted to the target position.

Optionally, presenting the second media content on the preset view interface comprises: presenting the second media content, the preset reply control and a preset return control on the preset view interface; and entering the preset interface in response to a trigger operation on the preset return control. In this way, if the current user does not want to reply, he can quickly return to the preset interface.

Exemplarily, as shown in FIG. 4, if the user triggers the preset reply control, the preset interface is returned to and the second user identifier is displayed at a first user identifier position in the identifier presentation area; if the user triggers the preset return control, the preset interface is returned to, and the presentation of the user identifier in the identifier presentation area remains unchanged, that is, the same as that before entering the preset view interface.

In some embodiments, after presenting the second media content on the preset view interface, the method further comprises: in response to a preset switch operation received based on the preset view interface, presenting third media content on the preset view interface, wherein the third media content includes media content unread by the current user. In this way, the current user can conveniently browse media content that has been received but not viewed. Exemplarily, the preset switching operation may be, for example, a sliding operation, such as an upward sliding operation or a downward sliding operation.

Optionally, the method may further comprise: in the process of displaying a preset application interface, in response to receiving second media content sent by a second user, displaying preset notification information, and in response to a trigger operation on the preset notification information, entering a preset view interface, and presenting the second media content on the preset view interface, wherein the preset application interface does not include the preset interface. In this way, when the current user is browsing the preset application interface other than the preset interface, he may be using other functions of the preset application, and at this time, the current user may be reminded to view by displaying the preset notification information, which may be, for example, an instant message notification.

In some embodiments, the method further comprises: entering a historical content presentation interface in response to a preset trigger operation on the preset interface; and presenting historical media content having been received by the current user on the historical content presentation interface. In this way, it is convenient for the user to quickly view the media content having been received. Optionally, the historical media content may be presented on the historical content presentation interface in a preset order, which may be, for example, the reverse order of the receiving time.

Exemplarily, the preset trigger operation on the preset interface may include a trigger operation on a specified area of the preset interface, such as a long press operation on a preview area, etc.; it may also include a trigger operation on a control on the preset interface, etc. Optionally, the method further comprises: displaying a preset control on the preset interface; wherein entering a historical content presentation interface in response to a preset trigger operation on the preset interface comprises: entering the historical content presentation interface in response to a trigger operation on the preset control. Herein, the specific style of the preset control is not limited, which for example may be an image matrix identifier, such as a matrix identifier composed of 3 times 3 squares.

In some embodiments, after the entering a historical content presentation interface, the method further comprises: presenting at least one user identifier on the historical content presentation interface; in response to a trigger operation on a third user identifier presented on the historical content presentation interface, presenting historical media content having been sent by a third user corresponding to the third user identifier presented on the media content presentation interface. In this way, the historical media content is classified and presented according to the dimension of the media content sender, which makes it convenient for the user to quickly find media content sent by a certain user, thereby improving the efficiency of searching for the historical media content.

In some embodiments, after presenting at least one user identifier in an identifier presentation area of the preset interface, the method further comprises: in response to a preset merge operation, merging at least two user identifiers presented in the identifier presentation area into a user combination identifier for presentation; wherein the performing acquisition of the image in response to a trigger operation on a first user identifier presented in the identifier presentation area comprises: performing acquisition of the image in response to a trigger operation on a target user combination identifier presented in the identifier presentation area; wherein the sending the first media content to the first user corresponding to the first user identifier comprises: sending the first media content to users corresponding to the user identifiers included in the target user combination identifier. In this way, batch sending of the media content can be conveniently implemented, further improving the efficiency of sending the media content.

Exemplarily, two or more user identifiers may be presented in the identifier presentation area. If the current user wants to send media content to users corresponding to a plurality of user identifiers that are currently presented in the identifier presentation area, a preset merge operation such as a two-finger pinch gesture (sliding two fingers relatively close to each other) may be first input to combine the plurality of user identifiers into a user combination identifier, and then by triggering the combined user identifier, the acquisition and batch sending of the media content are triggered. Optionally, after the sending of the media content is completed, the target user combination identifier is split and presented, for example, the presentation of individual user identifiers is restored.

In some embodiments, the method further comprises: in response to an adjustment operation on the user identifiers presented in the identifier presentation area, making corresponding adjustment on the user identifiers presented in the identifier presentation area. In this way, the user can be allowed to independently set the user identifier presented in the identifier presentation area, making it convenient for the user to quickly find a user identifier of the recipient and to determine the user identifiers included in a user identifier combination.

Exemplarily, an identifier adjustment control, such as an identifier adjustment control 405 in FIG. 4, may be displayed in the identifier presentation area. An edition state of the user identifier is entered by triggering the identifier adjustment control, and in the edition state, in response to the adjustment operation on the user identifier presented in the identifier presentation area, corresponding adjustment is performed on the user identifier presented in the identifier presentation area.

Optionally, the adjustment operation includes at least one of adjusting the order of the user identifiers, adjusting the number of the presented user identifiers, increasing the presented user identifiers, and decreasing the presented user identifiers. Exemplarily, in the edition state, the order of user identifiers may be adjusted by long press and drag, and the release position is the adjusted position. The identifier presentation area may have a plurality of sub-interfaces, a single sub-interface being displayed each time, and the sub-interface to which the user identifier belongs may be adjusted by dragging the user identifier. Increasing user identifiers may include dragging a user identifier from another sub-interface to the current sub-interface; decreasing user identifiers may include dragging a user identifier from the current sub-interface to another sub-interface. The number of user identifiers may be the total number of user identifiers presented on a single sub-interface, such as 4 in FIG. 4. The user may increase or decrease the number according to his needs, such as adjusting it to 2 or 6.

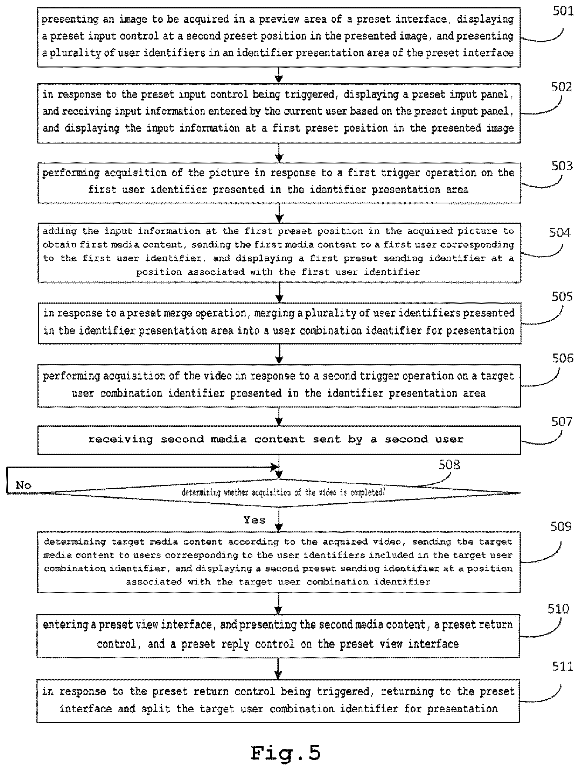

FIG. 5 is a schematic flow chart of another media content sending method provided by an embodiment of the present disclosure. The embodiment of the present disclosure is optimized based on respective optional solutions in the above embodiments. Specifically, the method comprises the following steps:

Step 501: presenting an image to be acquired in a preview area of a preset interface, displaying a preset input control at a second preset position in the presented image, and presenting a plurality of user identifiers in an identifier presentation area of the preset interface.

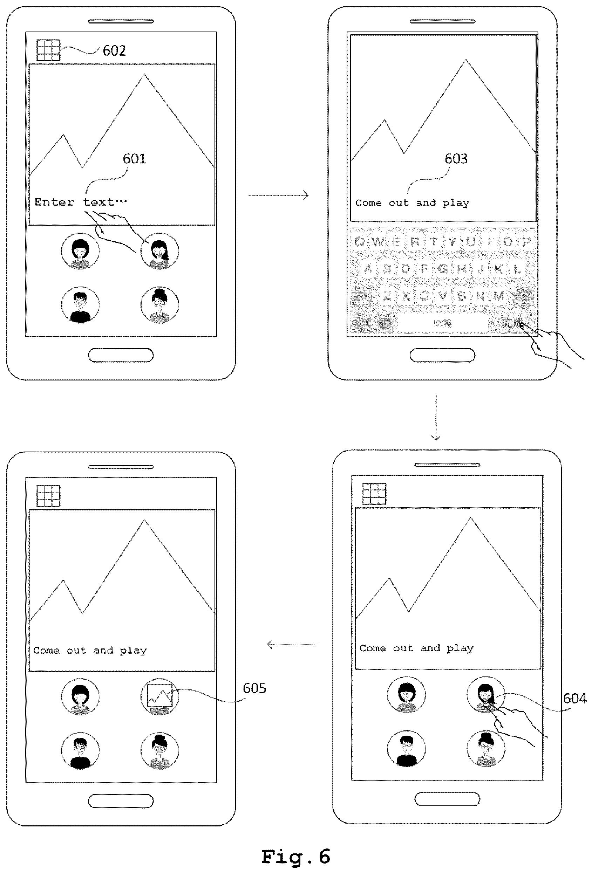

FIG. 6 is a schematic diagram of another interface interaction provided by an embodiment of the present disclosure, in which an image to be acquired is presented in a preview area of a preset interface, a preset input control 601 is displayed at a second preset position in the presented image, and a plurality of user identifiers are presented in an identifier presentation area of the preset interface. Optionally, a preset control 602 may also be displayed above the preview area of the preset interface, which is configured to trigger the entry to a historical content presentation interface and present historical media content having been received by the current user on the historical content presentation interface.

Step 502: in response to the preset input control being triggered, displaying a preset input panel, and receiving input information entered by the current user based on the preset input panel, and displaying the input information at a first preset position in the presented image.

As shown in FIG. 6, after the user clicks on the preset input control 601, an input keyboard pops up, and input information "Come out and play" entered by the current user is received based on the input keyboard, and the input information is displayed at the first preset position in the presented image. After entering the input information, the user may collapse the input keyboard by clicking the "Finish" button, and restore the display of the identifier presentation area.

Step 503: performing acquisition of the picture in response to a first trigger operation on the first user identifier presented in the identifier presentation area.

As shown in FIG. 6, if the current user wants to send the taken photo to a user corresponding to a second user identifier in a first row, he may click on a first user identifier 604, and a preset application may call a camera of an electronic device to take a photo.

Step 504: adding the input information at the first preset position in the acquired picture to obtain first media content, sending the first media content to a first user corresponding to the first user identifier, and displaying a first preset sending identifier at a position associated with the first user identifier.

Exemplarily, the first media content is an image with the words "Come out and play" added to the first preset position of the taken photo, the image is sent to the first user, a first preset sending identifier 605 being displayed at a center position of the first user identifier, which may specifically be a thumbnail of the taken photo. Exemplarily, within a preset time period after the sending is completed, the display of the preset interface may be restored, e.g., restored to the interface in the upper left corner of FIG. 6.

Step 505: in response to a preset merge operation, merging a plurality of user identifiers presented in the identifier presentation area into a user combination identifier for presentation.

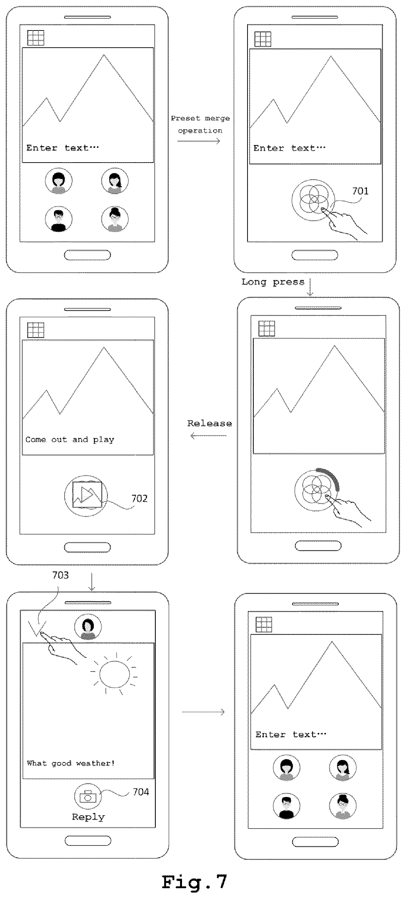

FIG. 7 is a schematic diagram of another interface interaction provided by an embodiment of the present disclosure. Exemplarily, if the user inputs a two-finger pinch operation, 4 user identifiers presented in the identifier presentation area may be merged into a user combination identifier 701.

Step 506: performing acquisition of the video in response to a second trigger operation on a target user combination identifier presented in the identifier presentation area.

Exemplarily, if the user wants to send a video to a group, the target user combination identifier may be triggered by long press.

Step 507: receiving second media content sent by a second user.

Step 508: determining whether acquisition of the video is completed, if so, executing step 509; otherwise, repeating step 508.

Exemplarily, if the user receives the second media content sent by the second user in the process of capturing a video by long pressing the target user combination identifier, it may be determined in real time whether video acquisition is completed; if not, acquisition may be continued until the user lets go and video acquisition is completed.

Step 509: determining target media content according to the acquired video, sending the target media content to users corresponding to the user identifiers included in the target user combination identifier, and displaying a second preset sending identifier at a position associated with the target user combination identifier.

Exemplarily, as shown in FIG. 7, after video acquisition is completed, the target media content to be sent is determined, and a second preset sending identifier 702 is displayed at the central position of the target user combination identifier. The second preset sending identifier may specifically be a cover of the target media content and a play identifier (e.g., the triangle in the figure), which are used to indicate that what is currently being sent is a video.

Step 510: entering a preset view interface, and presenting the second media content, a preset return control, and a preset reply control on the preset view interface.

Exemplarily, as shown in FIG. 7, after the second preset sending identifier 702 is displayed, the preset view interface may be automatically entered, on which the second media content, a preset return control 703 and a preset reply control 704 are presented.

Step 511: in response to the preset return control being triggered, returning to the preset interface and split presenting the target user combination identifier.

Exemplarily, as shown in FIG. 7, assuming that the user does not want to reply to the second media content for the moment, he may click the preset return control 703 to return to the preset interface and restore the individual presentation form of the user identifier. Optionally, the presentation of the target user combination identifier may be maintained, and after the user inputs a two-finger pinch gesture (such as sliding two fingers relatively apart from each other), the individual presentation form of the user identifier may be restored.

In some embodiments, after sending the target media content, the user may return to the preset interface directly without entering the preset view interface. It can be understood that, after the sending of the target media content is completed, the preset interface may restore the individual presentation form of the user identifier, or may still maintain the display of the target user combination identifier, and support the user to choose whether to restore the individual presentation form of the user identifier.

With the media content sending method provided by the embodiment of the present disclosure, the user can preview the image to be acquired on the preset interface, and at the same time, trigger the user identifiers or user combination identifier on the preset interface in different ways to conveniently trigger the acquisition and sending of pictures or videos, which can shorten the user operation path and improve the convenience in image acquisition and the sending of the media content. It supports batch sending of the media content, effectively improving the sending efficiency, and upon receiving the media content sent by other users, the user can automatically enter the preset view interface to view according to the actual situation, further improving the interaction efficiency.

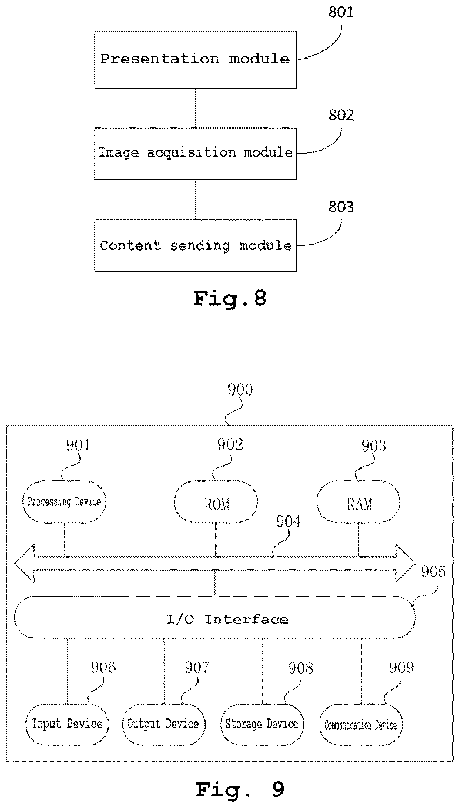

FIG. 8 is a schematic structural diagram of a media content sending apparatus provided by an embodiment of the present disclosure. As shown in FIG.8, the apparatus comprises:
a presentation module 801, configured to present an image to be acquired in a preview area of a preset interface, and present at least one user identifier in an identifier presentation area of the preset interface;
an image acquisition module 802, configured to perform acquisition of the image in response to a trigger operation on a first user identifier presented in the identifier presentation area;
a content sending module 803, configured to determine first media content according to the acquired image, and send the first media content to a first user corresponding to the first user identifier.

The media content sending apparatus provided by the embodiment of the present disclosure presents an image to be acquired in a preview area of a preset interface, and presents at least one user identifier in an identifier presentation area of the preset interface, performs acquisition of the image in response to a trigger operation on a first user identifier presented in the identifier presentation area, and determines first media content according to the acquired image, and sends the first media content to a first user corresponding to the first user identifier. By adopting the above technical solution, while previewing the image to be acquired on the preset interface, the user may conveniently trigger acquisition of the image and the sending of the media content by triggering the user identifiers on the preset interface, which can shorten the user operation path and improve the convenience in image acquisition and the sending of the media content.

Optionally, the presentation module, when presenting at least one user identifier in an identifier presentation area of the preset interface, is specifically configured to: present at least one user identifier corresponding to a user having a preset association relationship with the current user in the identifier presentation area of the preset interface.

Optionally, the apparatus further comprises:
an input information obtaining module, configured to obtain input information of the current user on the preset interface before responding to a trigger operation on a target user identifier presented in the identifier presentation area;
wherein the content sending module, when determining first media content according to the acquired image, is specifically configured to: determine the first media content according to the acquired image and the input information.

Optionally, the apparatus further comprises:
after obtaining input information of the current user on the preset interface, displaying the input information at a first preset position in the image presented in the preview area;
wherein the content sending module, when determining the first media content according to the acquired image and the input information, is specifically configured to: add the input information at the first preset position in the acquired image to obtain the first media content.

Optionally, the apparatus further comprises:
a preset input control display module, configured to display, before obtaining input information of the current user on the preset interface, a preset input control at a second preset position in the image presented in the preview area, wherein the preset input control is configured to trigger entry of the input information.

Optionally, the first preset position is associated with the second preset position.

Optionally, the image includes a picture and/or a video; wherein the image acquisition module is specifically configured to:
perform acquisition of the picture in response to a first trigger operation on the first user identifier presented in the identifier presentation area; and/or perform acquisition of the video in response to a second trigger operation on the first user identifier presented in the identifier presentation area, wherein the second trigger operation is different from the first trigger operation.

Optionally, the apparatus further comprises:
a sending identifier display module, configured to display, concurrently with or after sending the first media content to a first user corresponding to the first user identifier, a preset sending identifier at a position associated with the first user identifier.

Optionally, the preset sending identifier is associated with the first media content.

Optionally, the apparatus further comprises:
a preset view interface entry module, configured to enter a preset view interface in response to the receipt of second media content sent by a second user;
a content presentation module, configured to present the second media content on the preset view interface.

Optionally, the preset view interface entry module is specifically configured to:
determine whether acquisition of the image is currently being performed in response to the receipt of the second media content sent by the second user, and if not, enter the preset view interface.

Optionally, the content presentation module is specifically configured to: present the second media content and a preset reply control on the preset view interface.

The apparatus further comprises: a preset interface entry module, configured to enter the preset interface in response to a trigger operation on the preset reply control, and present the second user identifier corresponding to the second user in the identifier presentation area.

Optionally, the apparatus further comprises:
a switch presentation module, configured to present, after presenting the second media content on the preset view interface, third media content on the preset view interface in response to a preset switch operation received based on the preset view interface, wherein the third media content includes media content unread by the current user.

Optionally, the apparatus further comprises:
a historical content presentation interface entry module, configured to enter a historical content presentation interface in response to a preset trigger operation on the preset interface;
a historical content presentation module, configured to present historical media content having been received by the current user on the historical content presentation interface.

Optionally, the apparatus further comprises:
a user identifier presentation module, configured to present, after the entering a historical content presentation interface, at least one user identifier on the historical content presentation interface;
a user historical content presentation module, configured to present, in response to a trigger operation on a third user identifier presented on the historical content presentation interface, historical media content having been sent by a third user corresponding to the third user identifier presented on the media content presentation interface.

Optionally, the apparatus further comprises:
an identifier merging module, configured to merge, after presenting at least one user identifier in an identifier presentation area of the preset interface, at least two user identifiers presented in the identifier presentation area into a user combination identifier for presentation in response to a preset merge operation;
wherein the image acquisition module is specifically configured to: perform acquisition of the image in response to a trigger operation on a target user combination identifier presented in the identifier presentation area;
wherein the content sending module, when sending the first media content to the first user corresponding to the first user identifier, is specifically configured to: send the first media content to users corresponding to the user identifiers included in the target user combination identifier.

Optionally, the apparatus further comprises:
an identifier adjustment module, configured to make corresponding adjustment on the user identifiers presented in the identifier presentation area in response to an adjustment operation on the user identifiers presented in the identifier presentation area.

Optionally, the adjustment operation includes at least one of adjusting the order of the user identifiers, adjusting the number of the presented user identifiers, increasing the presented user identifiers, and decreasing the presented user identifiers.

The media content sending apparatus provided by the embodiment of the present disclosure may perform the media content sending method provided by the respective embodiments of the present disclosure, and possesses the corresponding functional modules and beneficial effects of the performed method.

It is worth noting that the various units and modules comprised in the above-mentioned apparatus are only divided according to functional logic, but are not limited to said division, as long as the corresponding functions can be achieved; in addition, the specific names of the functional units are only for the convenience of distinguishing each other, and are not used to limit the protection scope of the embodiment of the present disclosure.

FIG. 9 is a schematic structural diagram of an electronic device provided by an embodiment of the present disclosure. Reference is made below to FIG. 9, which shows a schematic structural diagram of an electronic device (e.g., a terminal device or a server in FIG. 9) 900 suitable for implementing an embodiment of the present disclosure. The terminal devices in the embodiment of the present disclosure may include, but are not limited to, mobile terminals such as mobile phones, laptop computers, digital broadcast receivers, personal digital assistants (PDAs), tablet computers (PADs), portable multimedia players (PMPs), vehicle-mounted terminals (such as vehicle-mounted navigation terminals), etc., as well as fixed terminals such as digital TVs, desktop computers, etc. The electronic device shown in FIG. 9 is merely an example and should not limit the functions and scope of use of the embodiment of the present disclosure.

As shown in FIG. 9, an electronic device 900 may comprise a processing device (such as a central processing unit, a graphics processor, etc.) 901, which can perform various appropriate actions and processes according to a program stored in a read-only memory (ROM) 902 or a program loaded from a storage device 908 to a random access memory (RAM) 903. In the RAM 903, various programs and data necessary for the operation of the electronic device 900 are also stored. The processing device 901, the ROM 902, and the RAM 903 are connected to one another via a bus 904. An edit/output (I/O) interface 905 is also connected to the bus 904 .

Typically, the following devices may be connected to the I/O interface 905: an input device 906 including, for example, a touch screen, a touchpad, a keyboard, a mouse, a camera, a microphone, an accelerometer, a gyroscope, etc.; an output device 907 including, for example, a liquid crystal display (LCD), a speaker, a vibrator, etc.; a storage device 908 including, for example, a magnetic tape, a hard disk, etc.; and a communication device 909. The communication device 909 may allow the electronic device 900 to communicate with other devices wirelessly or by wire to exchange data. Although FIG. 9 shows the electronic device 900 possessing various devices, it should be understood that it is not required to implement or possess all of the devices shown. A greater or smaller number of devices may alternatively be implemented or provided.

In particular, according to an embodiment of the present disclosure, the process described above with reference to the flow chart may be implemented as a computer software program. For example, an embodiment of the present disclosure provides a computer program product, which comprises a computer program carried on a non-transitory computer-readable medium, and the computer program contains program codes for executing the method shown in the flowchart. In such an embodiment, the computer program may be downloaded and installed from a network via the communication device 909, or installed from the storage device 908, or installed from the ROM 902. The computer program, when executed by the processing device 901, performs the above functions defined in the method of the embodiments of the present disclosure.

The names of the messages or information exchanged between a plurality of devices in the embodiments of the present disclosure are only used for illustrative purposes and are not used to limit the scope of these messages or information.

The electronic device provided by the embodiment of the present disclosure and the media content sending method provided by the above embodiments belong to the same inventive concept. For the technical details not fully described in this embodiment, please refer to the above embodiments. This embodiment has the same beneficial effects as the above embodiments.

An embodiment of the present disclosure provides a computer storage medium on which a computer program is stored, wherein the program, when executed by a processor, implements the media content sending method provided by the above embodiments.

It should be noted that the computer-readable medium mentioned above in the present disclosure may be a computer-readable signal medium or a computer-readable storage medium or any combination of the two. The computer-readable storage medium may be, for example but not limited to, an electronic, magnetic, optical, electromagnetic, infrared, or semiconductor system, apparatus, or device, or any combination of the foregoing. More specific examples of computer-readable storage media may include, but are not limited to, an electrical connection having one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing. In the present disclosure, the computer-readable storage medium may be any tangible medium that contains or stores a program for use by or in connection with an instruction execution system, apparatus, or device. In the present disclosure, the computer-readable signal medium may include a data signal propagated in a baseband or as a part of a carrier wave, in which a computer-readable program code is carried. Such propagated data signals may take a variety of forms, including but not limited to electromagnetic signals, optical signals, or any suitable combination of the foregoing. The computer-readable signal medium may also be any computer-readable medium other than computer-readable storage media and can send, propagate, or transport a program for use by or in connection with an instruction execution system, apparatus, or device. The program code embodied on the computer-readable medium may be transmitted using any appropriate medium, including but not limited to: wire, optical cable, radio frequency (RF), etc., or any suitable combination of the foregoing.

In some embodiments, the client and server may communicate using any currently known or later developed network protocol such as HyperText Transfer Protocol (HTTP), and may be interconnected with any form or medium of digital data communication (e.g., a communication network). Examples of communication networks include a local area network ("LAN"), a wide area network ("WAN"), an internetwork (e.g., the Internet), and a peer-to-peer network (e.g., an ad hoc peer-to-peer network), as well as any currently known or later developed network.

The computer-readable medium may be included in the electronic device, or may exist independently without being incorporated into the electronic device.

The computer-readable medium carries one or more programs, which, when executed by an electronic device, causes the electronic device to: present an image to be acquired in a preview area of a preset interface, and present at least one user identifier in an identifier presentation area of the preset interface; performing acquisition of the image in response to a trigger operation on a first user identifier presented in the identifier presentation area; determine first media content according to the acquired image, and send the first media content to a first user corresponding to the first user identifier.

Computer program code for performing operations of the present disclosure may be written in one or more programming languages, or a combination thereof, including but not limited to object-oriented programming languages such as Java, Smalltalk, C++, and conventional procedural programming languages such as "C" or similar programming languages. The program code may execute entirely on a user's computer, partly on the user's computer, as a stand-alone software package, partly on the user's computer and partly on a remote computer or entirely on the remote computer or server. In cases involving a remote computer, the remote computer may be connected to the user's computer through any type of network, including a local area network (LAN) or a wide area network (WAN), or may be connected to an external computer (e.g., through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, a program segment, or a portion of code, which contains one or more executable instructions for implementing the specified logical functions. It should also be noted that, in some alternative implementations, the functions noted in the blocks may occur out of the order noted in the figures. For example, two blocks shown in succession may, in fact, be executed substantially in parallel, or they may sometimes be executed in the reverse order, depending on the functionality involved. It should also be noted that each block in the block diagram and/or flowchart, and combinations of blocks in the block diagram and/or flowchart, can be implemented by a dedicated hardware-based system that performs the specified functions or operations, or can be implemented by a combination of dedicated hardware and computer instructions.

The involved units described in the embodiments in the present disclosure may be implemented by software or by hardware. In some cases, the name of a module does not constitute a limitation on the module itself. For example, the first media content presentation module may also be described as "a module that presents first media content to a current user on a preset interface, wherein the first media content is posted by a first user".

The functions described above herein may be performed at least in part by one or more hardware logic components. For example, and without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that can contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include electrical connections based on one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing.

In accordance with one or more embodiments of the present disclosure, a media content sending method is provided, which comprises:
presenting an image to be acquired in a preview area of a preset interface, and presenting at least one user identifier in an identifier presentation area of the preset interface;
performing acquisition of the image in response to a trigger operation on a first user identifier presented in the identifier presentation area; and
determining first media content according to the acquired image, and sending the first media content to a first user corresponding to the first user identifier.

In accordance with one or more embodiments of the present disclosure, the presenting at least one user identifier in an identifier presentation area of the preset interface comprises:
presenting at least one user identifier corresponding to a user having a preset association relationship with the current user in the identifier presentation area of the preset interface.

In accordance with one or more embodiments of the present disclosure, before responding to a trigger operation on a target user identifier presented in the identifier presentation area, the method further comprises:
obtaining input information of the current user on the preset interface;
wherein the determining first media content according to the acquired image comprises:
determining the first media content according to the acquired image and the input information.

In accordance with one or more embodiments of the present disclosure, after obtaining input information of the current user on the preset interface, the method further comprises:
displaying the input information at a first preset position in the image presented in the preview area;
wherein the determining the first media content according to the acquired image and the input information comprises:
   adding the input information at the first preset position in the acquired image to obtain the first media content.

In accordance with one or more embodiments of the present disclosure, before the obtaining input information of the current user, the method further comprises:
displaying a preset input control at a second preset position in the image presented in the preview area, wherein the preset input control is configured to trigger entry of the input information.

In accordance with one or more embodiments of the present disclosure, the first preset position is associated with the second preset position.

In accordance with one or more embodiments of the present disclosure, the image includes a picture and/or a video; wherein the performing acquisition of the image in response to a trigger operation on a first user identifier presented in the identifier presentation area comprises:
performing acquisition of the picture in response to a first trigger operation on the first user identifier presented in the identifier presentation area; and/or
performing acquisition of the video in response to a second trigger operation on the first user identifier presented in the identifier presentation area, wherein the second trigger operation is different from the first trigger operation.

In accordance with one or more embodiments of the present disclosure, concurrently with or after the sending the first media content to a first user corresponding to the first user identifier, the method further comprises:
displaying a preset sending identifier at a position associated with the first user identifier.

In accordance with one or more embodiments of the present disclosure, the preset sending identifier is associated with the first media content.

In accordance with one or more embodiments of the present disclosure, the method further comprises:
entering a preset view interface in response to the receipt of second media content sent by a second user; and
presenting the second media content on the preset view interface.

In accordance with one or more embodiments of the present disclosure, the entering a preset view interface in response to the receipt of second media content sent by a second user comprises:
in response to the receipt of the second media content sent by the second user, determining whether acquisition of the image is currently being performed, and if not, entering the preset view interface.

In accordance with one or more embodiments of the present disclosure, presenting the second media content on the preset view interface comprises:
presenting the second media content and a preset reply control on the preset view interface;
wherein the method further comprises:
   entering the preset interface in response to a trigger operation on the preset reply control, and presenting a second user identifier corresponding to the second user in the identifier presentation area.

In accordance with one or more embodiments of the present disclosure, after presenting the second media content on the preset view interface, the method further comprises:
in response to a preset switch operation received based on the preset view interface, presenting third media content on the preset view interface, wherein the third media content includes media content unread by the current user.

In accordance with one or more embodiments of the present disclosure, the method further comprises:
entering a historical content presentation interface in response to a preset trigger operation on the preset interface; and
presenting historical media content having been received by the current user on the historical content presentation interface.

In accordance with one or more embodiments of the present disclosure, after the entering a historical content presentation interface, the method further comprises:
presenting at least one user identifier on the historical content presentation interface;
in response to a trigger operation on a third user identifier presented on the historical content presentation interface, presenting historical media content having been sent by a third user corresponding to the third user identifier on the media content presentation interface.

In accordance with one or more embodiments of the present disclosure, after presenting at least one user identifier in an identifier presentation area of the preset interface, the method further comprises:
in response to a preset merge operation, merging at least two user identifiers presented in the identifier presentation area into a user combination identifier for presentation;
wherein the performing acquisition of the image in response to a trigger operation on a first user identifier presented in the identifier presentation area comprises:
   performing acquisition of the image in response to a trigger operation on a target user combination identifier presented in the identifier presentation area;
   wherein the sending the first media content to the first user corresponding to the first user identifier comprises:
      sending the first media content to users corresponding to the user identifiers included in the target user combination identifier.

In accordance with one or more embodiments of the present disclosure, the method further comprises:
in response to an adjustment operation on the user identifiers presented in the identifier presentation area, making corresponding adjustment on the user identifiers presented in the identifier presentation area.

In accordance with one or more embodiments of the present disclosure, the adjustment operation includes at least one of adjusting the order of the user identifiers, adjusting the number of the presented user identifiers, increasing the presented user identifiers, and decreasing the presented user identifiers.

In accordance with one or more embodiments of the present disclosure, a media content sending apparatus is provided, which comprises:
a presentation module, configured to present an image to be acquired in a preview area of a preset interface, and present at least one user identifier in an identifier presentation area of the preset interface;
an image acquisition module, configured to perform acquisition of the image in response to a trigger operation on a first user identifier presented in the identifier presentation area;
a content sending module, configured to determine first media content according to the acquired image, and send the first media content to a first user corresponding to the first user identifier.

In accordance with one or more embodiments of the present disclosure, an electronic device is provided, which comprises:
one or more processors;
a storage device, configured to store one or more programs,
wherein the one or more programs, when executed by the one or more processors, cause the one or more processors to implement the media content sending method provided by the embodiment of the present disclosure.

In accordance with one or more embodiments of the present disclosure, there is provided a storage medium containing computer executable instructions, which, when executed by a computer processor, are used for executing the media content sending method provided by the embodiment of the present disclosure.

The foregoing description is only exemplary of the preferred embodiments of the present disclosure and is illustrative of the principles of the technology employed. It will be appreciated by those skilled in the art that the scope of the disclosure herein is not limited to the particular combination of features described above, but also encompasses other combinations of features described above or equivalents thereof without departing from the spirit of the disclosure. For example, the above features and the technical features disclosed in the present disclosure (but not limited to) having similar functions are replaced with each other to form the technical solution.

Further, while operations are depicted in a particular order, this should not be understood as requiring that such operations be performed in the particular order shown or in a sequential order. Under certain circumstances, multitasking and parallel processing may be advantageous. Likewise, while the above discussion includes several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A media content sending method, comprising:
presenting an image to be acquired in a preview area of a preset interface, and presenting at least one user identifier in an identifier presentation area of the preset interface;
performing acquisition of the image in response to a trigger operation on a first user identifier presented in the identifier presentation area;
determining first media content according to the acquired image, and sending the first media content to a first user corresponding to the first user identifier.

2. The method according to claim 1, wherein the presenting at least one user identifier in an identifier presentation area of the preset interface comprises:
presenting at least one user identifier corresponding to a user having a preset association relationship with a current user in the identifier presentation area of the preset interface.

3. The method according to claim 1 or 2, wherein before responding to a trigger operation on a target user identifier presented in the identifier presentation area, the method further comprises:
obtaining input information of the current user on the preset interface;
wherein the determining first media content according to the acquired image comprises:
determining the first media content according to the acquired image and the input information.

4. The method according to claim 3, wherein after obtaining input information of the current user on the preset interface, the method further comprises:
displaying the input information at a first preset position in the image presented in the preview area;
wherein the determining the first media content according to the acquired image and the input information comprises:
adding the input information at the first preset position in the acquired image to obtain the first media content.

5. The method according to claim 4, wherein before obtaining input information of the current user on the preset interface, the method further comprises:
displaying a preset input control at a second preset position in the image presented in the preview area, wherein the preset input control is configured to trigger entry of the input information.

6. The method according to claim 5, wherein the first preset position is associated with the second preset position.

7. The method according to any one of claims 1-6, wherein the image includes a picture and/or a video; wherein the performing acquisition of the image in response to a trigger operation on a first user identifier presented in the identifier presentation area comprises:
performing acquisition of the picture in response to a first trigger operation on the first user identifier presented in the identifier presentation area; and/or
performing acquisition of the video in response to a second trigger operation on the first user identifier presented in the identifier presentation area, wherein the second trigger operation is different from the first trigger operation.

8. The method according to any one of claims 1-7, wherein concurrently with or after the sending the first media content to a first user corresponding to the first user identifier, the method further comprises:
displaying a preset sending identifier at a position associated with the first user identifier.

9. The method according to claim 8, wherein the preset sending identifier is associated with the first media content.

10. The method according to any one of claims 1-9, further comprising:
entering a preset view interface in response to the receipt of second media content sent by a second user; and
presenting the second media content on the preset view interface.

11. The method according to claim 10, wherein the entering a preset view interface in response to the receipt of second media content sent by a second user comprises:
in response to the receipt of the second media content sent by the second user, determining whether acquisition of the image is currently being performed, and if not, entering the preset view interface.

12. The method according to claim 10, wherein presenting the second media content on the preset view interface comprises:
presenting the second media content and a preset reply control on the preset view interface;
wherein the method further comprises:
entering the preset interface in response to a trigger operation on the preset reply control, and presenting a second user identifier corresponding to the second user in the identifier presentation area.

13. The method according to claim 10, wherein after presenting the second media content on the preset view interface, the method further comprises:
in response to a preset switch operation received based on the preset view interface, presenting third media content on the preset view interface, wherein the third media content includes media content unread by the current user.

14. The method according to any one of claims 1-13, further comprising:
entering a historical content presentation interface in response to a preset trigger operation on the preset interface; and
presenting historical media content having been received by the current user on the historical content presentation interface.

15. The method according to claim 14, wherein after the entering a historical content presentation interface, the method further comprises:
presenting at least one user identifier on the historical content presentation interface;
in response to a trigger operation on a third user identifier presented on the historical content presentation interface, presenting historical media content having been sent by a third user corresponding to the third user identifier on the media content presentation interface.

16. The method according to any one of claims 1-15, wherein after presenting at least one user identifier in an identifier presentation area of the preset interface, the method further comprises:
in response to a preset merge operation, merging at least two user identifiers presented in the identifier presentation area into a user combination identifier for presentation;
wherein the performing acquisition of the image in response to a trigger operation on a first user identifier presented in the identifier presentation area comprises:
performing acquisition of the image in response to a trigger operation on a target user combination identifier presented in the identifier presentation area;
wherein the sending the first media content to a first user corresponding to the first user identifier comprises:
sending the first media content to users corresponding to the user identifiers included in the target user combination identifier.

17. The method according to any one of claims 1-16, further comprising:
in response to an adjustment operation on the user identifiers presented in the identifier presentation area, making corresponding adjustment on the user identifiers presented in the identifier presentation area.

18. The method according to claim 17, wherein the adjustment operation includes at least one of adjusting the order of the user identifiers, adjusting the number of the presented user identifiers, increasing the presented user identifiers, and decreasing the presented user identifiers.

19. A media content sending apparatus, comprising:
a presentation module, configured to present an image to be acquired in a preview area of a preset interface, and present at least one user identifier in an identifier presentation area of the preset interface;
an image acquisition module, configured to perform acquisition of the image in response to a trigger operation on a first user identifier presented in the identifier presentation area;
a content sending module, configured to determine first media content according to the acquired image, and send the first media content to a first user corresponding to the first user identifier.

20. The apparatus according to claim 19, comprising modules configured to perform the method according to any one of claims 2-18.

21. An electronic device, comprising:
one or more processors;
a memory, configured to store one or more programs,
wherein the one or more programs, when executed by the one or more processors, cause the one or more processors to implement the media content sending method according to any one of claims 1-18.

22. A storage medium containing computer executable instructions, which, when executed by a computer processor, are configured for executing the media content sending method according to any one of claims 1-18.
